Europäisches Patentamt

European Patent Office

Office européen des brevets

(11) Numéro de publication : **0 341 170 B1**

(19)

## (12) FASCICULE DE BREVET EUROPEEN

(45) Date de publication du fascicule du brevet :
25.03.92 Bulletin 92/13

(51) Int. Cl.⁵ : **B29C 45/14,** B65D 83/14,
B05B 1/00

(21) Numéro de dépôt : **89420166.4**

(22) Date de dépôt : **02.05.89**

(54) Procédé de fabrication d'un récipient ou tube équipé d'une pompe, outillages correspondants et récipient ou tube obtenu.

(30) Priorité : **06.05.88 FR 8806603**

(43) Date de publication de la demande :
**08.11.89 Bulletin 89/45**

(45) Mention de la délivrance du brevet :
**25.03.92 Bulletin 92/13**

(84) Etats contractants désignés :
**AT BE CH DE ES FR GB GR IT LI LU NL SE**

(56) Documents cités :
**EP-A- 0 109 657**
**EP-A- 0 251 863**
**AT-B- 382 222**
**US-A- 3 988 413**

(73) Titulaire : **CEBAL**
**98, boulevard Victor Hugo**
**F-92115 Clichy (FR)**

(72) Inventeur : **Schneider, Bernard**
**4, rue des Six Frères**
**F-51800 Sainte Menehould (FR)**
Inventeur : **Chapet, Gérard**
**23, rue Biot**
**F-75017 Paris (FR)**

(74) Mandataire : **Vanlaer, Marcel et al**
**PECHINEY 28, rue de Bonnel**
**F-69433 Lyon Cédex 3 (FR)**

EP 0 341 170 B1

## Description

L'invention concerne un procédé de fabrication d'un récipient ou tube, dont le corps ou la jupe est en matière plastique, ou "métalloplastique", ce qui veut dire ici ayant au moins des couches superficielles en matière plastique et une couche intermédiaire métallique, et qui est équipé d'une pompe de distribution du produit liquide ou crémeux que contiendra ce récipient. L'invention concerne aussi les outillages utilisés dans ce procédé et certains des récipients ou tubes obtenus. Un "tube" est ici l'ébauche d'un récipient telle qu'elle est livrée au conditionneur de produit liquide ou crémeux qui, après remplissage du tube par ce produit, ferme l'extrémité inférieure du corps ou de la jupe de façon étanche, le tube devenant alors un "récipient".

Par la demande de brevet EP-A-0 251 863, on connait un récipient ou tube comportant une jupe en matière plastique ainsi qu'une tête comprenant une pompe de distribution d'un produit liquide ou crémeux munie d'un rebord annulaire de fixation, ce rebord étant relié de façon étanche par moulage à ladite jupe. Selon ce document : "le surmoulage est réalisé avec un bourrelet moulé en une seule pièce avec le tube". La figure correspondante montre que ce bourrelet situé à l'extrémité haute du tube enveloppe le bord de la collerette du doseur, il n'y a pas d'autre indication sur le moulage. La liaison moulée ainsi définie est fragile au niveau de la jonction entre le bourrelet et le tube souple et présente des risques de déchirement et de fuite liés à la tenue du tube par l'utilisateur et à l'aplatissement du tube en fin d'utilisation. La demanderesse a cherché à mettre au point un récipient ou tube ainsi équipé d'une pompe de distribution et évitant les inconvénients précédents.

## EXPOSE DE L'INVENTION

L'invention a pour premier objet un procédé de fabrication d'un tube équipé d'une pompe de distribution typiquement d'un produit liquide ou crémeux, ladite pompe portant un rebord annulaire de fixation dont le pourtour est au moins en surface en matière plastique, dans lequel on raccorde par moulage un corps ou une jupe dont au moins les surfaces sont en matière plastique audit rebord annulaire avec un bourrelet de matière plastique enserrant le pourtour du dit rebord, caractérisé en ce que :

a) on dispose ladite pompe entre un outillage inférieur central et un outillage supérieur central serrant entre eux de façon étanche ledit rebord et contenant la pompe avec des jeux permettant de limiter son échauffement pendant le moulage;

b) on dispose ledit corps ou ladite jupe autour d'un outillage inférieur annulaire dans lequel est emboîté ledit outillage inférieur central, l'extrémité supérieure de ce corps ou de cette jupe dépassant du dit outillage annulaire;

c) on dispose autour de ladite jupe ou du dit corps et des dits outillages centraux et inférieur annulaire des outillages de matrice annulaires définissant avec les outillages précédents un espace annulaire qui contient l'extrémité du dit rebord annulaire et l'extrémité supérieure du dit corps ou de ladite jupe, et définissant en outre ou comportant plusieurs canaux d'injection qui débouchent dans ledit espace annulaire;

d) on injecte de la matière plastique fondue simultanément par lesdits canaux dans ledit espace annulaire, on laisse refroidir et on démoule le tube obtenu. Le temps de refroidissement précédent est typiquepent supérieur à ladite durée d'injection.

Les rentrées d'air dans le récipient obtenu pendant l'utilisation sont alors faibles ou nulles, ce qui entraîne une conservation bien meilleure des produits sensibles à l'air.

La pompe utilisée est de préférence sans retour d'air, c'est-à-dire sans communication entre l'extérieur et l'intérieur du récipient pendant son utilisation, comme cela est connu par les documents EP-A-0 143 183 et EP-A-0 251 863.

Dans le procédé ci-dessus, l'espace annulaire compris entre les outillages et son alimentation par au moins 2 canaux d'injection permettent la formation d'une liaison annulaire moulée complète, étanche et reproductible entre le rebord annulaire de la pompe et le corps ou la jupe du tube. Et le délicat problème de la préservation de la pompe et de son mécanisme est résolu par une limitation efficace de son échauffement pendant le moulage.

L'espace annulaire servant au moulage est relativement large, de largeur typiquement comprise entre 1 et 2 mm sur la plus grande partie de sa hauteur, pour permettre son bon remplissage par la matière plastique fondue, et la couronne annulaire semi-rigide qui en résulte protège sa liaison avec le rebord annulaire de la pompe des sollicitations liées à la tenue du tube et à son écrasement en fin d'utilisation. Cette liaison a la forme d'un bourrelet de l'intérieur de ladite couronne annnulaire enserrant le pourtour du dit rebord. Le terme "semi-rigide" signifie que la tenue du récipient ou tube par cette couronne annulaire entraîne pas ou peu de déformation importante de cette couronne, au contraire de la tenue d'un tube souple par sa jupe.

## MEILLEUR MODE DE REALISATION

Selon ce meilleur mode résultant des essais, on procède aux étapes suivantes:

$a_1$) on dispose de ou on prépare des outillages de moulage ayant les particularités suivantes :

– l'outillage inférieur central et l'outillage supérieur central comportent des creux centraux se faisant face dans lesquels loge la pompe avec des jeux limitant son échauffement par le moulage, son rebord annulaire de fixation étant serré de façon étanche entre lesdits outillages en position d'injection ;
– les outillages définissent après fermeture un espace annulaire de moulage correspondant à la couronne annulaire à réaliser, cet espace étant compris entre d'une part l'outillage supérieur central, l'extrémité du rebord annulaire de fixation de la pompe et les outillages inférieurs munis du corps ou de la jupe, et d'autre part les outillages de matrice autres que l'outillage supérieur central ;

$a'_1$) les outillages supérieur central ou de matrice comportant au moins deux canaux d'injection de la matière plastique fondue débouchant chacun dans ledit espace annulaire par un orifice correspondant à un canal de diamètre 0,7 à 1,4 mm ou de section droite de même surface ;

$a_2$) on a mis ou on met en place le corps ou la jupe du tube autour desdits outillages inférieurs de sorte qu'il ou elle en dépasse d'une hauteur choisie.

b) on a disposé ou on dispose la pompe dans le creux central dudit outillage inférieur central.

c) on assemble les outillages supérieur central et de matrice et les outillages inférieurs, formant ledit espace annulaire, un outillage de matrice comportant une surface dans laquelle vient s'appliquer l'extrémité dépassante du corps ou de la jupe et on ferme l'ensemble des outillages de façon à assurer l'étanchéité sur le rebord annulaire de la pompe.

$d_1$) on injecte de la matière plastique fondue simultanément par les orifices supérieurs desdits canaux d'injection, en une durée comprise entre 1,5 et 5 secondes.

$d_2$) on laisse refroidir pendant un temps au moins égal à 3 fois le temps d'injection.

$d_3$) on démoule par déplacement relatif des outillages, la matière plastique des canaux d'injection ou "carottes froides" s'extrayant des outillages de matrice et/ou de fond de matrice et on extrait le tube.

$d_4$) on tronçonne ensuite les "carottes froides" habituellement par voie mécanique ou par ultrasons.

Les conditions ($a'_1$) et (c) ainsi que les étapes ($d_1$) à ($d_4$) et leur succession constituent des moyens préférentiels pouvant être employés indépendamment les uns des autres ou en combinaison quelconque dans le procédé général. Selon une disposition préférée pour la facilité du positionnement de la pompe et pour la limitation de son échauffement pendant le moulage, particulièrement de sa partie inférieure qui contient les parties les plus délicates de son mécanisme, le creux central de l'outillage inférieur central, qui est typiquement une "soupape", est surmonté d'un bord périphérique supérieur. La partie inférieure de la pompe se loge correctement dans ce creux central lorsque son rebord annulaire de fixation s'appuie sur ce bord périphérique supérieur, et ce rebord annulaire dépasse alors d'au moins 0,8 mm dudit bord périphérique, le creux central ayant à sa partie supérieure un jeu diamétral d'au moins 0,2 mm par rapport à la pompe et comportant en-dessous une portion de centrage de cette pompe ayant vis-à-vis d'elle un jeu diamétral maximal de 0,2 mm.

Le diamètre du corps de la pompe est habituellement plus fort au-dessus de son rebord annulaire qu'en dessous de ce rebord. La surface périphérique d'appui de l'outillage central de fond de matrice sur le rebord annulaire a une largeur minimale de 0,8 mm pour ne pas exercer d'effet d'entaille ou de découpe sur ce rebord en matière plastique, et sa largeur maximale est en pratique de 1,4 mm de façon à laisser un dépassement suffisant de la face supérieure du rebord annulaire pour la solidité du moulage.

Dans ce même but, la largeur du bord périphérique supérieur de l'outillage inférieur central dans sa disposition préférée est telle que le rebord annulaire de fixation de la pompe en dépasse de 1 à 3 mm au rayon, cette largeur étant elle-même de préférence d'au moins 1,5 mm.

Vis-à-vis du guidage et de la limitation de l'échauffement de la pompe, le creux central de l'outillage inférieur central a de préférence à sa partie supérieure un jeu par rapport à la pompe d'au moins 0,2 mm au diamètre sur au moins 5 mm de hauteur, et sa portion de centrage a au moins 3 mm de hauteur.

Par ailleurs, pour minimiser encore l'échauffement interne de la pompe, il est souhaitable que l'outillage supérieur central coiffe la partie supérieure de la pompe avec un jeu latéral d'au moins 0,3 mm au diamètre.

De façon générale, les dimensions des divers outillages sont ajustées pour que leur serrage avant injection de la matière plastique produise un serrage étanche du rebord annulaire de la pompe entre les surface et bord périphériques d'appui de l'outillage supérieur central et de l'outillage inférieur central.

Selon un premier mode de mise en oeuvre préférentiel du procédé de l'invention, convenant particulièrement à un moulage tube par tube, les canaux d'injection sont percés dans l'outillage supérieur central ou "noyau de fond de matrice" et débouchent vers le haut de l'espace annulaire de moulage, ces canaux étant inclinés par rapport à l'axe de symétrie longitudinal par convention vertical selon un angle choisi compris entre 24 et 42°.

De préférence, en ce qui concerne ces canaux d'injection, on adopte un angle d'inclinaison de 27 à 34° par rapport à l'axe vertical, ce qui donne le meilleur compromis entre la facilité d'injection et la facilité de démoulage. Les angles supérieurs à 35° donnent un démoulage des "carottes froides" difficile. Les angles de 24 à 27° conduisent à une plus grande hauteur de l'outillage supérieur central qu'on peut toutefois éviter ou limiter en abaissant le haut de son creux central de sorte que ce haut appuie sur le tube de sortie de la pompe en le rentrant. Cette mesure, qui n'a pas d'inconvénient notable pour l'échauffement de la pompe pendant le moulage, permet de retrouver une hauteur plus faible de l'outillage supérieur central et' de faciliter le démoulage. De préférence aussi, on préfère avoir, selon le diamètre de l'espace annulaire de moulage à alimenter, un nombre de canaux d'injection compris entre 2 et 5, ces canaux ayant un même diamètre choisi entre 0,8 et 1,3 mm et leurs orifices supérieurs étant' rassemblés mais non sécants à l'intérieur d'un cercle centré sur l'axe de diamètre 7 mm ou mieux de 5 mm, facilitant l'injection de la matière plastique dans ces canaux au moyen d'une seule buse.

Il est souvent nécessaire de prévoir une gorge ou une nervure extérieure dans la couronne en matière plastique du tube ou récipient de l'invention. Pour cela, on utilise à ce niveau des outillages de matrice à ouverture ou "plaquettes", munies de moyens d'écartement tels que des ressorts.

Le démoulage ($d_3$) du tube comprend alors les étapes détaillées suivantes :
– on abaisse les outillages inférieurs
– les plaquettes s'ouvrent, libérant la gorge ou la nervure
– on dégage le bloc matrice vers le haut, les carottes froides se démoulant et les outillages inférieurs s'écartant
– on décolle le tube des outillages inférieurs en injectant de l'air entre l'outillage inférieur annulaire et l'outillage inférieur central, et on extrait ce tube par le haut.

Les "carottes froides" sont ensuite éliminées typiquement par un moyen mécanique ou par ultrasons.

Selon un deuxième mode de mise en oeuvre préférentiel du procédé de l'invention, adapté à la production de séries de pièces plus importantes, l'outillage supérieur central déborde de l'espace annulaire et les canaux d'injection qui le traversent sont verticaux et débouchent à l'extrémité supérieure de cet espace annulaire, donnant un démoulage des "carottes froides" encore plus facile que dans le premier mode de mise en oeuvre. Les nombres de canaux et leurs diamètres sont sensiblement les mêmes que dans le premier mode. L'alimentation des canaux d'injection en matière plastique fondue est faite à partir d'un répartiteur ayant des busettes d'injection espacées.

L'invention a pour deuxième objet l'ensemble d'outillages de moulage utilisé, dans lequel :
– un outillage inférieur central et un outillage supérieur central comportent des creux centraux faisant face dans lesquels loge ladite pompe avec des jeux limitant son échauffement par le moulage, son rebord annulaire de fixation étant serré de façon étanche entre lesdits outillages en position d'injection ;
– lesdits outillages centraux et un outillage inférieur annulaire définissent avec des outillages de matrice annulaires disposés autour du corps ou de la jupe d'un tube à fabriquer un espace annulaire de moulage de la couronne annulaire de liaison dudit tube ;
– les outillages supérieur central ou de matrice comportent au moins deux canaux d'injection de la matière plastique fondue débouchant chacun dans ledit espace annulaire par un orifice correspondant à un diamètre de canal de 0,7 à 1,4 mm ou de section droite de même surface.

L'invention a pour troisième objet le récipient ou tube obtenu par le procédé constituant son premier objet. Ce récipient ou tube se distingue de celui connu par EP-A-0 251 863 en ce que le rebord annulaire de fixation de la pompe, rebord dont le pourtour est en matière plastique au moins en surface, à l'endroit de sa jonction moulée, est relié au corps ou à la jupe du tube par l'intermédiaire d'une couronne annulaire semi-rigide en matière plastique de même nature que celle des couches superficielles au moins dudit corps ou de ladite jupe, cette couronne annulaire comprenant une portion supérieure à l'intérieur de laquelle le pourtour dudit rebord est encastré, et une portion inférieure surmoulée sur l'extrémité supérieure dudit corps ou de ladite jupe.

De préférence, pour assurer une bonne résistance mécanique et une bonne étanchéité pendant l'utilisation, la liaison de la couronne annulaire avec le rebord annulaire de la pompe a la forme d'un bourrelet intérieur de cette couronne enserrant le pourtour dudit rebord sur une largeur d'au moins 0,8 mm, tandis que la portion de liaison de cette couronne a une épaisseur continûment décroissante depuis la couronne annulaire jusqu'au dit corps ou ladite jupe, sans surépaisseur locale telle qu'un bourrelet. L'extrémité inférieure de la couronne annulaire est ainsi surmoulée sur l'extrémité supérieure du corps ou de la jupe de la même façon qu'une tête de tube classique. Une portion notable du pourtour du rebord annulaire de la pompe est comprise dans le bourrelet intérieur de la couronne annnulaire moulée, typiquement 1 a 3 mm de largeur.

La matière plastique de la couronne supérieure moulée est de même nature que la matière plastique du corps ou de la jupe ou de sa couche superficielle intérieure si c'est une jupe métalloplastique. Lorsque la matière plastique du rebord annulaire de fixation de la pompe, qui constitue souvent une partie de l'habillage de la pompe, est différente de la matière plastique de la couronne supérieure de liaison et du corps ou de la jupe, on constate que la liaison entre le rebord annulaire de fixation et la matière plastique de la couronne supérieure est un collage à adhérence intime, sans refusion, et on a vérifié qu'on obtenait alors une bonne étanchéité. Pour améliorer la résistance mécanique de cette fixation et la sécurité de cette étanchéité, il est alors conseillé de munir le rebord annulaire dans sa partie comprise par le moulage d'au moins une nervure ou une rainure circulaire, par exemple d'une nervure de 0,4x0,4mm centrée sur son bord d'extrémité ou d'une nervure de 0,4x0,4 mm située sur la face supérieure de ce rebord à 0,8 mm du bord d'extrémité dans le cas où une largeur de 1,5 mm de ce rebord annulaire est comprise dans le moulage.

Dans le cas où les matières plastiques du rebord annulaire de fixation de la pompe, du corps ou de la jupe ou au moins de ses couches superficielles, et de la couronne supérieure sont de même nature, la liaison de cette couronne supérieure moulée avec le rebord annulaire de la pompe est une soudure. On ne peut pas distinguer par coupe micrographique optique cette liaison, et la largeur du rebord annulaire comprise dans cette soudure ne peut être déterminée avec précision que par la connaissance du type de pompe présent. L'étanchéité de cette liaison est excellente. Lorsque la matière plastique de cette liaison homogène est du polyéthylène, il est préférable d'avoir pour la jupe d'un tube souple, qui doit s'écraser au fur et à mesure du vidage du récipient, du PE basse densité, et pour la couronne supérieure de ce tube qui doit être résistante mécaniquement à la façon d'un goulot de récipient, du PE haute densité. La couronne supérieure moulée est habituellement prolongée vers le haut par une couronne axiale, jouant un rôle de protection du corps de pompe et du poussoir qui est fixé sur son tube de sortie et porte un moyen de délivrance latérale du produit conditionné. Le poussoir en position haute peut ainsi être en partie masqué par cette couronne de protection et s'abaisser à l'intérieur de cette couronne, qui garantit alors son guidage, lorsqu'il est enfoncé.

La liaison étanche ainsi réalisée entre le tube ou le récipient et la pompe permet de simplifier le conditionnement, la seule fermeture étanche à réaliser après remplissage par le produit étant celle de l'extrémité libre du corps ou de la jupe. On peut alors obtenir des volumes d'air résiduels après fermeture inférieurs à 1 cm³, et beaucoup moins si l'on ferme sous balayage de gaz neutre, ce qui est particulièrement intéressant pour les produits délicats et leur conservation.

La garantie d'étanchéité en tête obtenue prend toute son importance lorsqu'on utilise une pompe sans retour d'air, la liaison moulée réalisée étant inviolable. Il peut alors s'agir soit d'un tube souple dont la jupe aura son extrémité scellée après remplissage par le produit, soit d'un tube à corps semirigide d'épaisseur typiquement comprise entre 0,8 et 1,2 mm, qui sera de préférence équipé d'un piston coulissant de façon étanche à l'intérieur dudit corps.

De façon avantageuse, lorsque ce piston comporte une lèvre supérieure évasée souple assurant cette étanchéité, le bas dudit corps comporte un moyen d'échappement de l'air lors de l'insertion du piston dans le corps consistant en un relief intérieur transversal, c'est-à-dire sensiblement perpendiculaire à l'axe longitudinal dudit corps, ce relief ayant un diamètre intérieur minimal inférieur de 0,4 à 1,2 mm au diamètre intérieur dudit corps et étant précédé d'une zone d'entrée évasée permettant l'engagement libre de la lèvre supérieure évasée du piston puis son rétreint progressif, la partie médiane en retrait du piston étant de diamètre plus faible que ledit relief intérieur de façon à ne pas gêner l'avance du piston. Les essais ont montré que, lors de l'insertion du piston dans le corps du récipient, la lèvre supérieure ainsi rétreinte présentait des petites ondulations ou frisures et qu'elle les conservait jusqu'à l'arrêt du piston au contact ou à proximité du produit contenu, ce qui permet à l'air emprisonné de s'échapper entre ces petites ondulations et la surface intérieure cylindrique du corps. Par suite, il n'y a pas de recul du piston après arrêt, dû à la compression élastique de l'air occlus, ni d'effet de bulles lors de la distribution par la pompe.

Le piston comporte habituellement à l'arrière une extrémité inférieure semi-rigide servant à son guidage à l'intérieur du corps. Il est alors intéressant d'avoir dans le relief transversal une ou plusieurs interruptions, de longueur unitaire typiquement comprise entre 0,5 et 3 mm de façon à ne pas trop gêner le rétreint de la lèvre et à aider l'évacuation de l'air au moment où cette extrémité inférieure passe au travers du relief transversal. La zone d'entrée évasée de ce relief intérieur transversal est de préférence sensiblement tronconique avec un demiangle de cône de 10 a 25°, et le même axe de symétrie que le corps. Le relief transversal et sa zone d'entrée et de rétreint progressif sont réalisés typiquement soit par thermoformage du corps, soit par adjonction d'un pied rapporté s'emboîtant dans le bas du corps.

## AVANTAGES DE L'INVENTION

Ils sont les suivants :
– on obtient un tube déjà équipé d'une pompe, avec fixation étanche inviolable;
– le procédé de moulage de l'invention s'applique aussi bien aux liaisons hétérogènes qu'aux liaisons homogènes du rebord de fixation de la pompe et d'un corps ou d'une jupe de tube, ce rebord et ce corps ou cette jupe étant typiquement l'un et l'autre en polyoléfines, soit de même nature, soit différentes;
– les opérations liées au conditionnement du produit dans le tube sont simplifiées;
– en particulier, les fermetures de récipients sans air résiduel ou avec très peu d'air résiduel, importantes dans les cas où l'on utilise des pompes sans retour d'air, sont facilitées;
– le procédé, par la suppression des pièces utilisées dans une fixation mécanique de la pompe, classiquement par sertissage, permet des économies importantes.

**EXEMPLES**

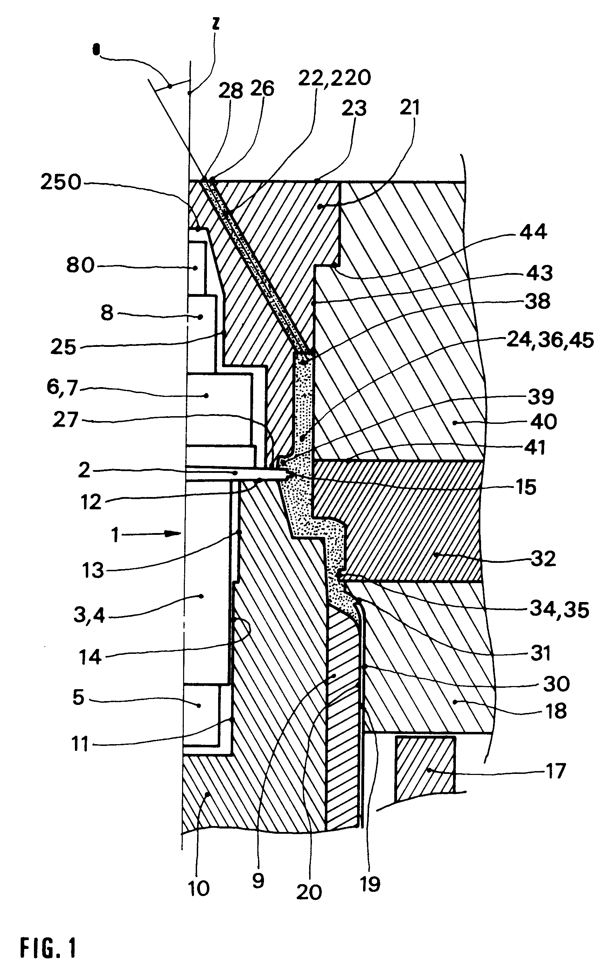

. La figure 1 représente un tube selon l'invention en position de moulage, selon le premier mode de mise en oeuvre de l'invention, en demi-coupe axiale.

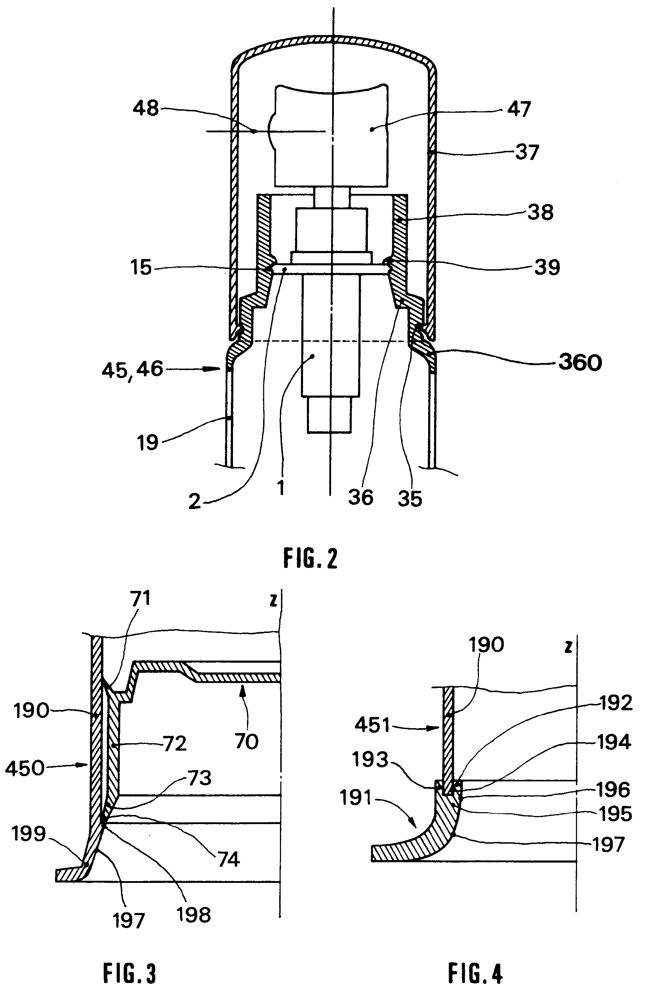

. La figure 2 représente la tête d'un récipient correspondant à ce tube, en coupe axiale.

. La figure 3 représente le bas du corps semi-rigide d'un second tube, portant un relief intérieur transversal, et un piston glissant engagé dans ce corps, en demi-coupe axiale.

. La figure 4 représente le bas du corps semi-rigide d'un troisième tube, muni d'un pied rapporté, en demi-coupe axiale.

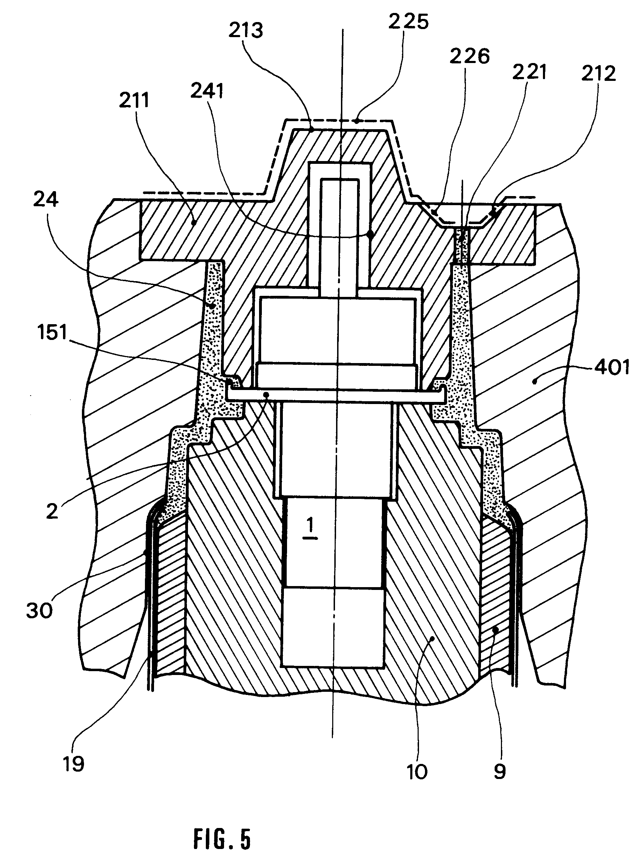

. La figure 5 représente un tube en position de moulage, selon un deuxième mode de mise en oeuvre de l'invention, en coupe axiale.

1)Premier exemple de mise en oeuvre de l'invention :

La pompe 1 de la figure 1 est sans retour d'air du type VP7 des Etablissements VALOIS (FR), elle est chemisée de polypropylène et son rebord annulaire de fixation 2, situé sensiblement à mi-hauteur de son corps, a un diamètre extérieur de 17,5 mm et une épaisseur de 1 mm, avec à mi-épaisseur de son bord d'extrémité une nervure périphérique 15 de section droite 0,4 x 0,4 mm. Sa partie inférieure 3, contenant le mécanisme de la pompe, comporte en-dessous du rebord annulaire 2 une portion 4 de hauteur 17 mm et de diamètre 8 mm et une tubulure 5 d'entrée de produit de hauteur 5 mm et de diamètre 5,5 mm.
Il faut éviter de chaufer la portion 4 au-dessus de 70°C, et si possible ne pas dépasser 50°C. La partie supérieure 6, contenant le haut du mécanisme et une tige creuse ou tige de sortie d'actionnement et d'éjection du produit, comporte successivement une portion 7 de hauteur 8 mm et de diamètre 11 à 11,5 mm, une portion 8 plus étroite de hauteur 6 mm et de diamètre 5 mm et la tige de sortie 80 de diamètre 3mm qui dépasse de 5 mm de la portion 8 en l'absence d'appui ou d'actionnement.

Les outillages inférieurs comprennent un outillage annulaire appelé "poinçon" 9 et un outillage central 10 appelé "soupape", emboîté dans l'outillage annulaire 9. L'outillage central ou soupape 10 comporte un creux central 11 surmonté d'un bord périphérique supérieur 12, creux 11 dans lequel loge la partie inférieure 3 de la pompe 1 lorsque son rebord annulaire de fixation 2 s'appuie sur ledit bord périphérique supérieur 12. Le rebord annulaire 2 dépasse du rebord périphérique supérieur 12 de largeur 3,15 mm de 1,2 mm. Le creux central 11 a à sa partie supérieure 13 un diamètre de 8,8 mm sur une hauteur de 8,5 mm et en-dessous un diamètre de 8,1 mm jusqu'à son fond correspondant à une profondeur totale de 23 mm. Donc dans cette partie supérieure 13, on a un jeu de 0,4 mm au diamètre par rapport à la portion 4, et en dessous dans la portion de centrage 14, on a un jeu faible de 0,1 mm au diamètre vis-à-vis du bas de cette portion 4 de la pompe 1 concernant alors une hauteur de 8,5 mm, ce qui assure un très bon centrage.

L'outillage inférieur central ou "soupape" 10 est ici emboîté dans l'outillage inférieur annulaire 9 et une partie cylindrique, ces deux outillages 9 et 10 étant fixés sur une chemise non représentée, dont le bord rigide 17 s'appuie sous la matrice 18 pour le serrage des outillages avant l'opération de moulage. Des injections d'air comprimé entre l'outillage inférieur central ou "soupape" 10 et l'outillage inférieur annulaire 9 permettent l'éjection de la pièce. Une portion de jupe 19 en polyéthylène basse densité de diamètre extérieur 30 mm, d'épaisseur 0,5 mm et de longueur ou hauteur 80 mm a été enfilée autour de la surface extérieure verticale 20 de l'outillage inférieur central 9 et, cette surface s'inclinant, dépasse de cet outillage 9 d'une hauteur de 2 mm.

Les outillages de matrice comportent un outillage supérieur central appelé "noyau de fond de matrice" 21 coiffant la partie supérieure 6 de la pompe 1 en position de moulage, cet outillage 21 s'appuyant alors de façon étanche sur le rebord annulaire de fixation 2 de la pompe 1.

Dans le présent exemple, l'outillage supérieur central 21 comporte 3 canaux d'injection 22 inclinés à 30°30′ par rapport à l'axe Z et espacés à 120°, tous les trois de diamètre 1,2 mm, les centres 28 de leurs orifices supérieurs 26 étant situés sur un cercle de diamètre 3 mm centré sur l'axe Z . La surface périphérique d'appui 27 de l'outillage 21 sur le rebord annulaire 2 en polypropylène a une largeur de 1, 1 mm et le rebord annulaire 2 dépasse cette surface 27 de 1,2 mm, c'est-à-dire de la largeur déjà libre sur sa face inférieure. L'outillage supérieur central 21 et la "soupape" 10 ont, à l'extérieur de leurs surfaces d'appui 27 et 12 sur le rebord 2, des surfaces tronconiques inclinées à 15° par rapport à l'axe, ce qui est favorable au démoulage et à la résistance mécanique de la liaison moulée. Le creux central 24 de l'outillage supérieur central 21 comporte, en allant de son ouverture à son fond ou haut 23, une première partie de diamètre 13,5 mm et de hauteur 8,5 mm, puis une seconde partie de diamètre 6 mm et de hauteur 6 mm, puis une partie tronconique de diamètre de fond 3,65 mm et de hauteur 4,4 mm. Le jeu latéral du creux 24 de l'outillage 21 par rapport à la pompe y est de 0,75 à 1 mm au diamètre pour la première partie et de 0,5 mm au diamètre dans la seconde partie.

Les outillages de matrice comportent, en plus de l'outillage supérieur central 21 déjà décrit, en allant du bas vers le haut :

– une matrice annulaire 18 comportant une surface inférieure verticale 30 surplombée par une surface incurvée 31 ayant en section axiale un profil en quart de rond. En position d'assemblage, la portion de jupe 19 se trouve comprise entre les surfaces verticales 20 et 30 de la soupape 10 et de la matrice 18 et son extrémité qui dépasse est poussée contre la surface incurvée 31 et en prend la forme ;

– un jeu de 3 plaquettes ou tiroirs 32, munies de ressorts de rappel et d'écartement, comportant au bas de leurs surfaces intérieures un épaulement ou saillie 34, de section droite rectangulaire, destiné à la formation d'une gorge circulaire 35 de la couronne 36 à mouler (figure 2) selon l'espace annulaire de moulage 24. Ces plaquettes 32 forment la variation de diamètre de cette couronne supérieure ou de liaison 36 entre sa partie portant la gorge 35, servant à l'accrochage du capot 37 du récipient, et son bourrelet 39 de liaison avec le rebord annulaire 2 de la pompe 1. Les plaquettes 32 supportent le fond de matrice 40 par une surface horizontale 41. On remarque que de telles plaquettes pourraient aussi bien servir à la formation d'une nervure d'accrochage, leur saillie 34 étant alors remplacée par une gorge ;

– le fond de matrice 40 dont la surface intérieure verticale 43 délimite la couronne de protection 38 et dont le rebord horizontal intérieur 44 supporte l'extérieur du noyau de fond de matrice 21.

Les outillages de matrice 18 et 32 et 40 et 21 sont contenus dans un bloc matrice dans lequel ils sont comme d'habitude refroidis par l'extérieur, et par les contacts métal sur métal de leur assemblage. Ce refroidissement ne suffit pas en lui-même pour obtenir une limitation suffisante de l'échauffement de la la pompe, cet'te limitation est obtenue grâce à la conception des outillages et aux jeux imposés dans l'invention.

Les dimensions des outillages sont ajustées pour que leur serrage, avant injection de la matière plastique, produise un serrage étanche du rebord annulaire 2 de la pompe 1 entre les surface et bord périphérique d'appui 27 et 12 de l'outillage supérieur central 21 et de l'outillage inférieur central ou soupape 10. Ce serrage est dans le cas présent effectué par la chemise 17 supportant les outillages 9, 10, 18, 32 et 40, et par la busette d'injection de la matière plastique appuyée sur la face supérieure 23 du noyau de fond de matrice 21.

Les outillages décrits conviennent également pour la fabrication de tubes surmontés de pompes plus petites, de type "VP3" des Etablissements VALOIS, et ils ont été aussi utilisés à cet effet.

Moulage et démoulage d'un tube

Les outillage ont été serrés selon la disposition décrite, ils définissent entre eux un espace annulaire de moulage 24 compris entre : d'une part l'outillage supérieur central 21, l'extrémité du rebord annulaire 2 de la pompe 1 et la soupape 10 et l'outillage inférieur annulaire 9 ainsi que l'extrémité de la jupe 19 dépassant de ce poinçon 9, et d'autre part le fond de matrice 40, les plaquettes 32, et le haut de la matrice 18. Cet espace annulaire 24 a une géométrie qui correspond à la couronne annulaire en matière plastique 39 à réaliser, elle est de largeur constante à chaque niveau grâce aux dispositions de centrage et de fixation de la pompe 1. Cette largeur est de 1 mm au niveau de la saillie 34 des plaquettes 32, correspondant à l'épaisseur au fond de la gorge 35 à réaliser ; elle est de 1,55 mm au-dessus de cette gorge 35, de 3 mm en-dessous du rebord de fixation 2, de 1,7 mm à l'extrémité de ce rebord 2, compte non tenu de sa fine nervure périphérique 15, et de 1,2 mm pour la portion correspondant à la couronne annulaire de protection 38 qui surmontera le bourrelet périphérique de liaison 39.

Une fois l'assemblage ainsi préparé, on a appliqué la busette du pot d'injection, comportant à sa base un orifice d'injection de diamètre 5mm, sur la face supérieure 23 de l'outillage supérieur central 21, les 3 orifices 26 des canaux 22 étant alors à l'aplomb dudit orifice de diamètre 5 mm, et on a injecté du polyéthylène haute densité fondu, de température environ 260 à 290° C, pendant 3 secondes. On a relevé le pot d'injection et sa busette, la matière plastique fondue se décollant parfaitement de la face 23 restée relativement froide, et on a laissé assembler pendant un temps de refroidissement de 12 secondes.

On a ensuite procédé au démoulage par l'enchaînement des opérations suivantes :

– on a abaissé les outillages inférieurs 9 et 10 avec leur chemise comprenant le bord d'appui 17 ;

– l'empilage des outillages de matrice 18 et 32 et 40 et supérieur central 21 n'étant plus serré, les plaquettes 32 se sont ouvertes en s'écartant de l'axe Z, libérant la gorge circulaire 35 de la couronne de liaison 36 ;

– le bloc matrice, comprenant les outillages de matrice, et l'outillage supérieur central 21 , a été soulevé, les trois carottes froides 220 s'extrayant des canaux d'injection 22, et les outillages inférieurs s'effaçant sur le côté ;

– on a injecté de l'air entre l'outillage inférieur annulaire 9 et l'outillage central inférieur ou "soupape" 10, ce qui a produit le décollement du tube réalisé 45 des outillages 9 et 10, et on a extrait le tube 45 par le haut.

On a ensuite tronçonné les carottes froides 220, fixées à l'extrémité supérieure de la couronne de protection 38 du tube 45, en reprenant 0,5mm sur cette extrémité.

## 2/ Tube et récipient obtenus (fig. 2)

Le récipient 46, obtenu par fermeture de l'extrémité inférieure de la jupe 19 du tube 45, est représenté dans la figure 2, la couronne supérieure annulaire de liaison 36 de ce tube 45 réalisée par l'opération de moulage décrite étant seule coupée et hachurée. La liaison réalisée entre le rebord annulaire 2 en polypropylène et la couronne 36 en polyéthylène haute densité est celle d'un très bon collage, consolidé par la présence de la nervure périphérique 15. La liaison surmoulée entre la couronne 36 et la jupe 19 du tube consiste en une portion annulaire 360 d'épaisseur décroissant continûment jusqu'à la jupe 19, sans surépaisseur locale telle qu'un bourrelet. La couronne de protection 38 s'étend suffisamment haut pour que le poussoir 47, fixé sur le tube de sortie de la pompe 1, rentre à l'intérieur de cette couronne 38 jusqu'au dessous de la buse latérale de pulvérisation d'axe 48. Le capot de protection 37 est encliqueté dans la gorge circulaire 35 du tube 45 ou récipient 46. On peut également supprimer la gorge 35 et prévoir un enfoncement avec léger forcement du capot sur la couronne 36.

## 3/ Tubes avec corps semi-rigides

Les tubes 450 et 451 (fig. 3 et 4) sont obtenus par le même procédé de moulage que le tube 45, ils comportent chacun une pompe sans retour d'air et un corps cylindrique circulaire 190 de diamètre extérieur 36 mm en polyéthylène d'épaisseur 1mm.
La figure 3 montre le tube 450 équipé d'un piston glissant 70, coulissant de façon étanche à l'intérieur du corps 190 et remontant ainsi automatiquement dans ce corps 190 lors d'une distribution de liquide ou de crème par la pompe. Le piston 70 comporte, en-dessous de sa lèvre évasée souple de coulissement étanche 71, une partie médiane en retrait 72, et une extrémité inférieure semi-rigide de guidage 73, de diamètre extérieur au repos 34,3mm. Le relief intérieur transversal 198, perpendiculaire à l'axe de symétrie longitudinal Z, a un diamètre intérieur de 33mm et une zone d'entrée tronconique 197, de demi-angle de cône 15° et de hauteur 4mm selon la direction de l'axe Z, son diamètre d'engagement 35mm permettant l'engagement libre de la lèvre évasée souple 71 de diamètre au repos 34,5mm lors de l'insertion du piston 70 dans le corps 190.

Dans le tube 451 (fig.4), le relief intérieur transversal 195 et 192 est réalisé par l'adjonction d'un pied moulé 191 à base d'appui élargie, ce pied comportant deux lèvres circulaires intérieure 192 et extérieure 193, chacune d'épaisseur 0,5mm et de hauteur 4mm, la double lèvre 192 et 193 emboîtant l'extrémité inférieure du corps 190. Le diamètre intérieur minimal est celui de la lèvre 192, sa surface intérieure 196 est précédée d'une surface d'entrée évasée 197. La fixation du pied 191 au bas du corps tubulaire 190 est faite par collage.

## 4) Deuxième exemple de mise en oeuvre du procédé de l'invention (Fig.5)

Dans cet exemple, il y a deux modifications importantes par rapport au premier exemple. D'abord, la couronne annulaire 361 ne comporte pas de relief circulaire d'accrochage tel que la gorge 35 du premier exemple, elle est prévue pour la fixation d'un capot s'emboitant autour d'elle avec forcement, et il n'y a donc plus de plaquettes écartables telles que celles 32 du premier exemple. L'outillage du fond de matrice 40 et l'outillage de matrice 18 du premier exemple sont remplacés par un seul outillage périphérique 401, l'encombrement total de l'outillage étant réduit, ce qui est avantageux pour une disposition à plusieurs positions de moulage, adaptée à une fabrication de série.

La deuxième modification est indépendante de la première, elle porte sur l'outillage supérieur central ou noyau de fond de matrice ici 211, qui s'appuie comme précédemment sur l'outillage 401 qui l'entoure, mais en débordant vers l'extérieur de l'espace annulaire 24, à partir de l'extrémité supérieure de cet espace 24, l'injection de matière plastique y étant faite par 3 canaux d'injection verticaux courts 221 débouchant à l'extrémité supérieure de cet espace 24. Ces canaux sont espacés à 120°, et tous trois de diamètre 1,2 mm.

La disposition de la pompe 1, ici de type VP3 des Etablissements VALOIS, par rapport aux outillages et ses jeux par rapport à ces outillages sont sensiblement les mêmes que dans le premier exemple, à l'exception du relief périphérique 15 du bord d'extrémité du rebord annulaire 2 du premier exemple qui est ici remplacé par un relief périphérique 151 du pourtour de la face supérieure de ce rebord 2, procurant une bonne résistance au descellement par forcement diamétral de la couronne annulaire 361. Les matières sont les mêmes que dans le premier exemple.

Chaque canal d'injection 221 est surmonté d'un creux d'entrée 212 dans lequel s'appuie une busette d'injection 226 du pot répartiteur 225. Le centrage de ce pot 225 pour l'injection est facilité par l'emboîtage d'un relief 213 de l'outillage central 211, relief situé ici à l'aplomb du logement 241 qui coiffe la pompe 1 avec du jeu. La position du pot 225 au moment de l'injection est représentée sur la fig. 5 en trait discontinu.

Les canaux d'injection 221 étant verticaux et courts, le démoulage est particulièrement aisé. Ces canaux 221 sont en outre plus éloignés du logement 241 de la pompe 1 que dans le premier exemple.

L'échauffement de cette pompe 1 par le moulage est encore plus faible.

## Utilisations

Les récipients et tubes obtenus par l'invention sont utilisés dans les domaines de la cosmétologie, de la pharmacie, de l'hygiène et des produits alimentaires, spécialement lorsqu'on veut améliorer la conservation du produit conditionné.

## Revendications

1. Procédé de fabrication d'un tube (45) équipé d'une pompe (1) de distribution d'un produit, ladite pompe (1) portant un rebord annulaire (2) de fixation dont le pourtour est au moins en surface en matière plastique, dans lequel on raccorde par moulage un corps (190) ou une jupe (19) dont au moins les surfaces sont en matière plastique audit rebord annulaire (2) avec un bourrelet de matière plastique (39) enserrant le pourtour du dit rebord (2), caractérisé en ce que :
   a) on dispose ladite pompe (1) entre un outillage inférieur central (10) et un outillage supérieur central (21) serrant entre eux de façon étanche ledit rebord (2) et contenant la pompe (1) avec des jeux permettant de limiter son échauffement pendant le moulage;
   b) on dispose ledit corps (190) ou ladite jupe (19) autour d'un outillage inférieur annulaire (9) dans lequel est emboîté ledit outillage inférieur central (10), l'extrémité supérieure de ce corps (190) ou de cette jupe (19) dépassant du dit outillage annulaire (9);
   c) on dispose, autour de ladite jupe (19) ou du dit corps (190) et desdits outillages inférieur central (10) et supérieur central (21) et inférieur annulaire (9), des outillages de matrice annulaires (18, 32, 40) définissant avec les outillages précédents (10, 21 et 9) un espace annulaire (24) qui contient l'extrémité du dit rebord annulaire (2) et l'extrémité supérieure du dit corps (190) ou de ladite jupe (19), et définissant en outre ou comportant plusieurs canaux d'injection (22) qui débouchent dans ledit espace annulaire (24);
   d) on injecte de la matière plastique fondue simultanément par lesdits canaux (22) dans ledit espace annulaire (24), on laisse refroidir et on démoule le tube obtenu (45).

2. Procédé selon la revendication 1, dans lequel lesdits canaux d'injection (22) débouchent chacun dans ledit espace annulaire (24) par un orifice correspondant à un diamètre de canal de 0,7 à 1,4 mm ou de section droite de surface équivalente.

3. Procédé selon l'une quelconque des revendications 1 ou 2, dans lequel le corps (190) ou la jupe (19) est disposé à l'intérieur d'une matrice (18) comportant une surface (31) dans laquelle vient s'appliquer l'extrémité du corps (190) ou de la jupe (19) dépassant de l'outillage inférieur (9).

4. Procédé selon l'une quelconque des revendications 1 à 3, dans lequel dans les opérations (d) :
   – on injecte de la matière plastique fondue simultanément par les orifices supérieurs (26) desdits canaux d'injection (22), en une durée comprise entre 1,5 et 5 secondes;
   – puis on laisse refroidir pendant un temps au moins égal à 3 fois le temps d'injection;
   – puis on démoule par déplacement relatif des outillages, la matière plastique des canaux d'injection (22) ou "carottes froides" (220) s'extrayant des outillages de matrice et/ou de fond de matrice (21), et on extrait le tube (45);
   – et ensuite on tronçonne les "carottes froides".

5. Procédé selon l'une quelconque des revendications 1 à 4, dans lequel on dispose la partie inférieure (3) de la pompe (1) dans un creux (11) du dit outillage inférieur central (10), ce creux (11) étant surmonté d'un bord périphérique supérieur (12) sur lequel s'appuie alors le rebord annulaire (2) de ladite pompe (1), ledit rebord annulaire (2) dépassant alors d'au moins 0,8 mm du dit bord périphérique (12), et ledit creux (11) ayant à sa partie supérieure (13) un jeu diamétral d'au moins 0,2 mm par rapport à la pompe (1) et comportant au-dessous une portion de centrage (14) de la pompe (1) ayant un jeu diamétral maximal de 0,2 mm par rapport à cette pompe.

6. Procédé selon la revendication 5, dans lequel la surface périphérique d'appui (27) de l'outillage supérieur central (21) logeant la partie supérieure de la pompe (1) sur le rebord annulaire de fixation (2) de cette pompe (1) a une largeur comprise entre 0,8 et 1,4 mm.

7. Procédé selon l'une quelconque des revendications 5 ou 6, dans lequel le rebord annulaire de fixation (2) de la pompe (1) dépasse du dit bord périphérique supérieur (12) du dit outillage inférieur central (10) de 1 à 3 mm.

8. Procédé selon la revendication 5, dans lequel le creux (11) du dit outillage inférieur central (10) a à sa partie supérieure (13) un jeu par rapport à la pompe (1) d'au moins 0,2 mm au diamètre sur au moins 5 mm de hauteur, et en ce que ladite portion de centrage (14) a au moins 3 mm de hauteur.

9. Procédé selon la revendication 6, dans lequel l'outillage supérieur central (21) coiffe la partie supérieure (6) de la pompe (1) avec un jeu latéral d'au moins 0,3 mm au diamètre.

10. Procédé selon l'une quelconque des revendications 1 à 9, dans lequel lesdits canaux d'injection (22) sont percés dans l'outillage supérieur central (21) coiffant la pompe (1) et débouchent vers le haut de l'espace annulaire de moulage (24), ces canaux (22) étant inclinés par rapport à l'axe vertical (Z) selon un

angle (θ) choisi entre 24 et 40°.

11. Procédé selon la revendication 10, dans lequel les canaux d'injection (22) sont inclinés par rapport à l'axe (Z) de 24 à 27°, le haut (250) du creux (25) de l'outillage supérieur central (21) appuyant sur le tube de sortie (9) de la pompe (1) de façon à réduire la hauteur dudit outillage (21) et à faciliter le démoulage.

12. Procédé selon l'une quelconque des revendications 10 ou 11, dans lequel les canaux d'injection (22) sont en nombre compris entre 2 et 5, leur diamètre commun étant compris entre 0,8 et 1,3 mm et leurs orifices supérieurs (26) étant situés à l'intérieur d'un cercle de diamètre 7 mm centré sur l'axe (Z).

13. Procédé selon l'une quelconque des revendications 1 à 9, dans lequel les canaux d'injection (221) sont percés dans l'outillage supérieur central (211) coiffant la pompe (1) et débouchent à l'extrémité supérieure de l'espace annulaire de moulage (24), ces canaux (221) étant verticaux.

14. Procédé selon l'une quelconque des revendications 1 à 13, dans lequel l'espace annulaire de moulage (24) comporte, au-dessus de la matrice (18), le contour d'une nervure ou d'une gorge (35) périphérique du tube (45), ledit contour étant réalisé par des outillages à ouverture (32) munis de moyens d'écartement.

15. Procédé selon la revendication 14, dans lequel on démoule le tube selon les étapes sucessives suivantes :
– on abaisse les outillages inférieurs (10) et (9) ;
– lesdits outillages (32) s'ouvrent, libérant' la gorge (35) ou la nervure;
– on dégage les outillages supérieurs (18 et 32 ) et (40 et 21) vers le haut, les carottes froides (220) se démoulant et les outillages inférieurs (10) et (9) s'écartant;
– on décolle le tube (45) des outillages inférieurs (10 et 9) en injectant de l'air entre le poinçon (9) et l'outillage inférieur central (10) et on extrait ce tube (45) par le haut.

16. Ensemble d'outillages de moulage (10 et 9 et 18 et 32 et 42 et 21) pour la mise en oeuvre du procédé de l'une quelconque des revendications 1 à 15, dans lequel :
– un outillage inférieur central (10) et un outillage supérieur central (21) comportent des creux centraux (11 et 25) se faisant face dans lesquels loge ladite pompe (1) avec des jeux limitant son échauffement par le moulage, son rebord annulaire de fixation (2) étant serré de façon étanche entre lesdits outillages (10 et 21) en position d'injection;
– lesdits outillages centraux (10 et 21) et un outillage inférieur annulaire (9) définissent avec des outillages de matrice annulaires (18, 32, 40) disposés autour d'un dit corps (190) ou d'une dite jupe (19) d'un dit tube (45) à fabriquer un espace annulaire de moulage (24) d'une couronne annulaire de liaison (36) de la pompe (1) et du corps (190) ou de la jupe (19) dudit tube (45) ;
– les outillages supérieur central (21) ou de matrice comportent au moins deux canaux (22) d'injection de la matière plastique fondue débouchant chacun dans ledit espace annulaire (24) par un orifice correspondant à un diamètre de canal de 0,7 à 1,4 mm ou de section droite de même surface.

17. Ensemble d'outillages selon la revendication 16, dans lequel le creux central (11) de l'outillage inférieur central (10) est surmonté d'un bord périphérique supérieur (12), la partie inférieure (3) de la pompe (1) se logeant dans ce creux (11), lorsque son rebord annulaire de fixation (2) s'appuie sur ledit bord périphérique supérieur (12) ledit rebord annulaire (2) dépassant alors d'au moins 0,8 mm du dit bord périphérique (12), ledit creux (11) ayant à sa partie supérieure (13) un jeu diamètral d'au moins 0,2 mm par rapport à la pompe (1) et comportant en-dessous une portion de centrage (14) de la pompe (1) ayant un jeu diamètral maximal de 0,2 mm par rapport à cette pompe.

18. Ensemble d'outillages selon l'une quelconque des revendications 16 ou 17, dans lequel les canaux d'injection (22 ; 221) en nombre compris entre 2 et 5, sont percés dans l'outillage central de fond de matrice (21 ; 211) et débouchent vers le haut de l'espace annulaire de moulage (24), ces canaux (22) étant soit verticaux, ledit outillage central (331) débordant par rapport audit espace annulaire (24), soit inclinés par rapport à l'axe vertical (Z) selon un angle (θ) compris entre 24 et 40°.

19. Récipient 46 ou tube 45, obtenable par le procédé de l'une quelconque des revendications 1 à 15, comportant un corps (190) ou une jupe (19) en matière plastique ou métalloplastique ainsi qu'une tête comprenant une pompe (1) de distribution d'un produit liquide ou crémeux munie d'un rebord annulaire (2) de fixation, ce rebord (2) étant relié de façon étanche par moulage audit corps (190) ou à ladite jupe (19), caractérisé en ce que ledit rebord (2), dont le pourtour est en matière plastique au moins en surface, est relié audit corps (190) ou à ladite jupe (19) par l'intermédiaire d'une couronne annulaire (36) semi-rigide en matière plastique de même nature que celles des couches superficielles dudit corps (190) ou de ladite jupe (19), le pourtour dudit rebord (2) étant encastré dans ladite couronne (36).

20. Récipient (46) ou tube (45) selon la revendication 19, dans lequel la liaison de la couronne annulaire avec le rebord annulaire (2) a la forme d'un bourrelet intérieur (39) de ladite couronne (36) enserrant le pourtour dudit rebord sur une largeur d'au moins 0,8 mm, tandis que la portion de liaison (360) de cette couronne (36) avec ledit corps (190) ou ladite jupe (19) a une épaisseur continûment décroissante sans surépaisseur locale.

21. Récipient (46) ou tube (45) selon l'une quelconque des revendications 19 ou 20, dans lequel la largeur dudit rebord annulaire (2) comprise dans le bourrelet intérieur (39) de ladite couronne supérieure (26) est de 1 à 3 mm.

22. Récipient (46) ou tube (45) selon l'une quelconque des revendications 19 ou 20, dont la matière plastique du rebord annulaire (2) et celle de ladite couronne annulaire (36) sont différentes, et dont le rebord annulaire (2) est pourvu dans sa partie comprise dans le moulage (39) d'au moins une nervure (15) ou une rainure circulaire.

23. Récipient (46) ou tube (45) selon la revendication 22, dans lequel le rebord annulaire (2) comporte sur son bord extrême une nervure (15) de largeur et hauteur toutes deux comprises entre 0,3 et 0,5 mm, l'épaisseur dudit bord extrême étant elle-même comprise entre 0,6 et 1,2 mm.

24. Récipient (46) ou tube (45) selon l'une quelconque des revendications 19 ou 20, dans lequel la matière plastique du pourtour dudit rebord annulaire (2) est de même nature que celles de la couronne annulaire (36) et des couches superficielles dudit corps (190) ou de ladite jupe (19).

25. Récipient (46) ou tube (45) selon l'une quelconque des revendications 19 à 24, dans lequel ladite couronne annulaire (36) en matière plastique se prolonge vers le haut par une couronne de protection (38).

26. Récipient (46) ou tube (45) selon l'une quelconque des revendications 19 à 25, dans lequel ladite pompe (1) est sans retour d'air.

27. Récipient (46) ou tube souple (45) selon la revendication 24, dans lequel ladite matière plastique du pourtour du rebord annulaire (2) est du polyéthylène, la jupe (19) du tube (45) étant en polyéthylène basse densité et sa couronne supérieure (36) en polyéthylène haute densité.

28. Récipient ou tube (450 ; 451) à corps semi-rigide (190) selon l'une quelconque des revendications 19 à 27, comportant après remplissage un piston (70) coulissant de façon étanche à l'intérieur dudit corps (190).

29. Récipient ou tube (450 ; 451) selon la revendication 28, dont le piston (70) comporte lui-même une lèvre supérieure évasée souple (71) coulissant dans le corps (190) en assurant l'étanchéité, le bas dudit corps (190) portant un moyen d'échappement de l'air lors de l'insertion dudit piston (70) dans ce corps (190) consistant en un relief intérieur transversal (195 ; 198) de diamètre intérieur minimal inférieur de 0,4 à 1,2 mm au diamètre intérieur dudit corps (190), ce relief (195 ; 198) étant précédé d'une zone d'entrée évasée (197) permettant l'engagement libre de la lèvre évasée (71) du piston (70) puis son rétreint progressif, la partie médiane en retrait (72) du piston (70) étant de diamètre plus faible que ledit relief intérieur (195 ; 198).

## Patentansprüche

1. Verfahren zur Herstellung einer mit einer Pumpe (1) zur Ausgabe eines Produkts versehenen Tube (45), wobei die Pumpe (1) einen ringförmigen Befestigungsrand (2) aufweist, dessen Umfang wenigstens an der Oberfläche aus Kunststoffmaterial besteht, bei dem durch Guss ein Körper (190) oder eine Schürze (19), von der wenigstens die Oberflächen aus Kunststoffmaterial sind, an dem ringförmigen Rand (2) mit einem Wulst aus Kunststoffmaterial (39) verbunden wird, wobei der Umfang des Randes (2) eingeklemmt wird, **dadurch gekennzeichnet:**

a) daß die Pumpe (1) zwischen einem unteren mittigen Werkzeug (10) und einem oberen mittigen Werkzeug (21) angeordnet wird, die untereinander auf abdichtende Weise den Rand (2) einklemmen und die Pumpe (1) enthalten mit Spiel, was erlaubt, sein Aufheizen während des Formens zu begrenzen;

b) der Körper (190) oder die Schürze (10) um ein ringförmiges unteres Werkzeug (9) angeordnet wird, in dem das mittige untere Werkzeug (10) eingesetzt ist, wobei das obere Ende des Körpers (190) oder der Schürze (19) über das ringförmige Werkzeug (9) hervorsteht;

c) um die Schürze (19) oder den Körper (190) und das mittige untere (10) und mittige obere (21) und ringförmige untere (9) Werkzeug ringförmige Matrizenwerkzeuge (18, 32, 40) gesetzt werden, die mit den vorhergehenden Werkzeugen (10, 21 und 9) einen ringförmigen Raum (24) definieren, der das Ende des ringförmigen Randes (2) und das obere Endes des Körpers (190) oder der Schürze (19) enthält, und wobei weiterhin mehrere Einspritzkanäle (22), die in den ringförmigen Raum (24) münden, definiert werden oder vorgesehen sind;

d) geschmolzenes Kunststoffmaterial gleichzeitig durch die Kanäle (22) in den ringförmigen Raum (24) eingspritzt wird, abgekühlt wird, und die erhaltene Tube (45) ausgeformt wird.

2. Verfahren nach Anspruch 1, bei dem die Einspritzkanäle (22) jeweils in den ringförmigen Raum (24) durch eine entsprechende Öffnung mit einem Kanaldurchmesser von 0, 7 bis 1,4 mm oder Querschnittsfläche von äquivalenter Oberfläche münden.

3. Verfahren nach Anspruch 1 oder 2, bei dem der Körper (190) oder die vorgeformte Schürze (19) im Inneren einer Matrize (18) angeordnet wird, die eine Oberfläche (31) aufweist, in der das Ende des Körpers (190) oder der Schürze (19) in Andruck gelangt, das über das untere Werkzeug (9) vorsteht.

4. Verfahren nach einem der Ansprüche 1 bis 3, bei dem in den Schritten (d):

– geschmolzenes Kunststoffmaterial gleichzeitig durch die oberen Öffnungen (26) der Einspritzkanäle (22) eingespritzt werden während einer Dauer zwischen 1,5 und 5 Sekunden;

– sodann während einer Zeit, die wenigstens gleich dem Dreifachen der Einspritzzeit ist, abgekühlt wird;

– sodann durch relatives Bewegen der Werkzeuge, des Kunststoffmaterials der Einspritzkanäle (22) oder der "kalten Angüsse" (carottes froides) (220) ausgeformt wird unter Herausziehen der Matrizenwerkzeuge und/oder des Bodens der Matrize (21) und das Rohr (45) herausgezogen wird;

– und sodann die "kalten Angüsse" in Stücke geteilt werden.

5. Verfahren nach einem der Ansprüche 1 bis 4, bei dem der untere Bereich (3) der Pumpe (1) in einen Hohlraum (11) des mittigen unteren Werkzeugs (10) gesetzt wird, wobei dieser Hohlraum (5) von einem oberen Umfangsrand (12) überhöht wird, auf dem sodann der ringförmige Rand (2) der Pumpe (1) sich abstützt, wobei der ringförmige Rand (2) wenigstens um 0,8 mm den Umfangsrand (12) übersteigt, und der Hohlraum (11) an seinem oberen Bereich (13) ein diametrales spiel von wenigstens 0,2 mm bezüglich der Pumpe (1) aufweist und unterhalb einen Zentrierungsbereich (14) der Pumpe (1) aufweist, der ein maximales diametrales spiel von 0,2 mm bezüglich dieser Pumpe aufweist.

6. Verfahren nach Anspruch 5, bei dem die Umfangsabstützfläche (27) des mittigen oberen Werkzeugs (21), das den oberen Bereich der Pumpe (1) auf dem ringförmigen Befestigungsrand (2) dieser Pumpe (1) aufnimmt, eine Breite zwischen 0,8 und 1,4 mm aufweist.

7. Verfahren nach einem der Ansprüche 5 oder 6, bei dem der ringförmige Befestigungsrand (2) der Pumpe (1) den oberen Umfangsrand (12) des mittigen unteren Werkzeugs (10) um 1 bis 3 mm übersteigt.

8. Verfahren nach Anspruch 5, bei dem der Hohlraum (11) des mittigen unteren Werkzeugs (10) an seinem oberen Bereich (13) ein spiel bezüglich der Pumpe (1) von wenigstens 0,2 mm zum Durchmesser auf wenigstens 5 mm Höhe aufweist und daß der Zentrierungsbereich (14) wenigstens 3 mm Höhe aufweist.

9. Verfahren nach Anspruch 6, bei dem das mittige obere Werkzeug (21) den oberen Bereich (6) der Pumpe (1) mit einem seitlichen Spiel von wenigstens 0,3 mm zum Durchmesser überdeckt.

10. Verfahren nach einem der Ansprüche 1 bis 9, bei dem die Einspritzkanäle (22) in das obere mittige Werkzeug hineingebrochen sind, der die Pumpe (1) überdeckt, und nach dem oberen des ringförmigen Formungsraums (24) münden, wobei die Kanäle (22) bezüglich der vertikalen Achse (Z) gemäß einem Winkel (θ), gewählt zwischen 24 und 40°, geneigt sind.

11. Verfahren nach Anspruch 10, bei dem die Einspritzkanäle (22) bezüglich der Achse (Z) um 24 bis 27° geneigt sind, wobei das Obere (250) des Hohlraums (25) des mittigen oberen Werkzeugs (21) auf das Austrittsrohr (9) der Pumpe (1) derart drückt, daß es die Höhe des Werkzeugs (21) reduziert und daß es die Ausformung erleichtert.

12. Verfahren nach einem der Ansprüche 10 oder 11, bei dem die Einspritzkanäle (22) in der Anzahl zwischen 2 und 5 sind, ihr gemeinsamer Durchmesser zwischen 0,8 und 1,3 mm liegt und ihre oberen Öffnungen (26) im Inneren eines Kreises von 7 mm Durchmesser angeordnet sind, der auf der Achse (Z) zentriert ist.

13. Verfahren nach einem der Ansprüche 1 bis 9, bei dem die Einspritzkanäle (221) in das mittige obere Werkzeug (211), das die Pumpe (1) überdeckt, eingebracht sind und am oberen Ende des ringförmigen Formraums (24) münden, wobei die Kanäle (221) vertikal verlaufen.

14. Verfahren nach einem der Ansprüche 1 bis 13, bei dem der ringförmige Formraum (24) oberhalb der Matrize (18) die Kontur einer Umfangsrippe oder einer -kerbe (35) der Tube (45) aufweist, wobei die Kontur erzeugt wird durch Werkzeuge mit Öffnung (32), die mit einer Beabstandungseinrichtung versehen sind.

15. Verfahren nach Anspruch 14, bei dem die Tube durch die folgenden aufeinanderfolgenden Schritte ausgeformt wird:

– die unteren Werkzeuge (10) und (9) werden abgesenkt;

– die Werkzeuge (32) öffnen sich, wobei sie die Kerbe (35) oder die Rippe freigeben;

– die oberen Werkzeuge (18 und 32) und (40 und 21) nach oben freigelegt werden, wobei die kalten Angüsse (220) sich ausformen und die unteren Werkzeuge (10 und 9) sich beabstanden;

– die Tube (45) von den unteren Werkzeugen (10 und 9) getrennt wird unter Einspritzen von Luft zwischen die Dornstange (9) und dem unteren mittigen Werkzeug (10) und die Tube (45) nach oben herausgezogen wird.

16. Gusswerkzeuganordnung (10 und 9 und 18 und 32 und 42 und 21) für die Durchführung des Verfahrens nach einem der Ansprüche 1 bis 15, in dem:

– ein mittiges unteres Werkzeug (10) und ein mittiges oberes Werkzeug (21) zwei zentrale Hohlräume (11 und 25) aufweisen, die einander gegenüberliegen, in denen sich die Pumpe (1) mit einem Spiel befindet, das ihre Aufheizung durch das Guss begrenzt, wobei der Befestigungsrand (2) auf dichtende Weise zwischen den Werkzeugen (10 und 21) in Einspritzstellung eingeklemmt ist;

– die zentralen Werkzeuge (10 und 21) und ein ringförmiges unteres Werkzeug (9) mit ringförmigen Matrizenwerkzeugen (18, 32 ,40), die um einen Körper (190) oder eine Schürze (19) einer herzustellenden Tube (45) einen ringförmigen Gussraum (24) eines ringförmigen Verbindungskranzes (36) der Pumpe (1) und des Körpers (190) oder der Schürze (19) der Tube (45) definieren;

– die oberen mittigen Werkzeuge (21) oder Matrizenwerkzeuge wenigstens zwei Einspritzkanäle (22) des eingespritzen Kunststoffmaterials aufweisen, die jeweils in den ringförmigen Raum (24) durch eine Öffnung münden, die einem Kanaldurchmesser von 0,7 bis 1,4 mm oder einem Querschnitt derselben Oberfläche entspricht.

17. Werkzeuganordnung nach Anspruch 16, bei der der zentrale Hohlraum (11) des unteren mittigen Werkzeugs (10) von einem oberen Umfangsrand (12) überstiegen wird, wobei der untere Bereich (3) der Pumpe (1) in dem Hohlraum (11) aufgenommen ist, wenn sein ringförmiger Befestigungsrand (2) sich auf dem oberen Umfangsrand (12) abstützt, wobei der ringförmige Rand (2) so um wenigstens 0,8 mm über den Umfangsrand (12) vorsteht, wobei der Hohlraum (11) an seinem oberen Bereich (13) ein diametrales Spiel von wenigstens 0,2 mm bezüglich der Pumpe (1) aufweist und unterhalb einen Zentrierungsbereich (14) der Pumpe (1) aufweist, die ein diametrales Spiel von max. 0,2 mm bezüglich dieser Pumpe hat.

18. Werkzeuganordnung nach einem der Ansprüche 16 und 17, bei der die Einspritzkanäle (22; 221) in ihrer Anzahl zwischen 2 und 5, den Boden des zentralen Matrizenwerkzeuges (21; 211) durchbrechen und nach oben in den ringförmigen Formungsraum (24) münden, wobei diese Kanäle (22) entweder vertikal sind, wobei das zentrale Werkzeug (331) bezüglich des ringförmigen Raums (24) übersteht, oder geneigt sind bezüglich der vertikalen Achse (Z) gemäß einem Winkel (θ) zwischen 24 und 40°.

19. Behälter (46) oder Tube (45), erhaltbar durch das Verfahren nach einem der Ansprüche 1 bis 15, mit einem Körper (190) oder einer Schürze (19) aus Kunststoff- oder Metall-Kunststoffmaterial sowie einem Kopf mit einer Spenderpumpe (1) eines flüssigen oder cremigen Produkts, versehen mit einem ringförmigen Befestigungsrand (2), wobei dieser Befestigungsrand (2) durch Formung auf dichtende Weise mit dem Körper (190) oder der Schürze (19) verbunden ist, **dadurch gekennzeichnet,** daß der Rand (2), dessen Umfang aus Kunststoffmaterial wenigstens an der Oberfläche ist, mit dem Körper (190) oder der Schürze (19) über einen ringförmien halbstarren Kranz (36) aus Kunststoffmaterial von derselben Art wie jenes der Oberflächenschichten des Körpers (190) oder der Schürze (19) verbunden ist, wobei der Umfang des Randes (2) in den Kranz (36) eingelassen ist.

20. Behälter (46) oder Tube (45) nach Anspruch 19, bei der die Verbindung des ringförmigen Kranzes mit dem ringförmigen Rand (2) die Form eines inneren Wulstes (39) des Kranzes (36) aufweist, wodurch der Umfang des Randes auf einer Breite von wenigstens 0,8 mm eingeklemmt wird, während der Verbindungsbereich (360) dieses Kranzes (36) mit dem Körper (190) oder der Schürze (19) eine kontinuierlich abnehmende Dicke ohne lokale Überdicke aufweist.

21. Behälter (46) oder Tube (45) nach einem der Ansprüche 19 oder 20, bei der die Dicke des rohrförmigen Randes (2) in dem inneren Wulst (39) des oberes Kranzes (26) zwischen 1 und 3 mm beträgt.

22. Behälter (46) oder Tube (45) nach einem der Ansprüche 19 oder 20, deren Kunststoffmaterial des ringförmigen Randes (2) und jenes des ringförmigen Kranzes (36) unterschiedlich sind, und von der der ringförmige Rand (2) an seinem in der Form (39) enthaltenen Bereich mit wenigstens einer kreisförmigen Rippe (15) oder Kerbe versehen ist.

23. Behälter (46) oder Tube (45) nach Anspruch 22, bei der der ringförmige Rand (2) an seinem Endrand eine Rippe (15) mit einer Breite und Höhe aufweist, die beide zwischen 0,3 und 0,5 mm liegen, wobei die Dicke des Endrandes selbst zwischen 0,6 und 1,2 mm liegt.

24. Behälter (46) oder Tube (45) nach einem der Ansprüche 19 oder 20, bei der das Kunststoffmaterial des Umfangs des ringförmigen Randes (2) von derselben Art ist, wie jene des ringförmigen Kranzes (36) und der Oberflächenschichten des Körpers (190) oder der Schürze (19).

25. Behälter (46 ) oder Tube (45) nach einem der Ansprüche 19 bis 24, bei der der ringförmige Kranz (36) aus Kunststoffmaterial sich nach oben durch einen Schutzkranz (38) verlängert.

26. Behälter (46) oder Tube (45) nach einem der Ansprüche 19 bis 25, in dem die Pumpe (1) ohne Luftrückfluß ist.

27. Behälter (46) oder biegsame Tube (45) nach Anspruch 24, bei der das Kunststoffmaterial des Umfangs des ringförmigen Randes (2) Polyethylen ist, wobei die Schürze (19) der Tube (45) aus Polyethylen niedriger Dichte und ihr oberer Kranz (36) aus Polyethylen hoher Dichte ist.

28. Behälter oder Tube (450; 451) mit halbstarrem Körper (190) nach einem der Ansprüche 19 bis 27, die nach Füllen einen Kolben (70) aufweist, der auf dichtende Weise im Inneren des Körpers (190) gleitet.

29. Behälter oder Tube (450; 451) nach Anspruch 28, deren Kolben (70) selbst eine obere aufgeweitete biegsame Lippe (71) aufweist, die in dem Körper (190) gleitet zur Sicherstellung der Dichtheit, wobei das Untere des Körpers (190) eine Luftauslaßeinrichtung trägt bei dem Einführen des Kolbens (70) in den Körper (190), die aus einem inneren Querrelief (195; 198) besteht von unterem Minimal-Innendurchmesser von 0,4 bis 1,2 mm zum Innendurchmesser des Körpers (190), wobei das Relief (195; 198) eine aufgeweitete Eintrittszone (197) vorangesetzt hat, die den freien Eingriff der aufgeweiteten Lippe (71) des Kolbens (70) sodann sein allmähliches Zurückziehen erlaubt, wobei der zurückgezogene Mittenbereich (72) des Kolbens (70) von einem geringeren Durchmesser ist als das Innenrelief (195; 198).

## Claims

1. A process for the production of a tube (45) fitted with a pump (1) for distribution of a product, said pump (1) bearing an annular fixing rim (2) rose periphery is at least at the surface of plastics material, wherein a body (190) or a skirt (19) of which at least the surfaces are of plastic material are connected by moulding to said annular rim (2) with a shoulder portion (39) of plastics material embracing the periphery of said rim (2), characterised in that:

a) said pump (1) is disposed between a central lower tool (10) and a central upper tool (21) which sealingly grip the rim (2) between them and contain the pump (1) with clearances permitting heating thereof during the moulding operation to be limited;

b) said body (190) or said skirt (19) is disposed around an annular lower tool (9) in rich said central lower tool (10) is engaged, the upper end of said body (190) or said skirt (19) projecting beyond said annular tool (9);

c) disposed around said skirt (19) or said body (190) and said central lower, central upper and annular lower tools (10, 21, 9) are annular die tools (18, 32, 40) which with the foregoing tools (10, 21 and 9) define an annular space (24) rich contains the end of said annular rim (2) and the upper end of said body (190) or said skirt (19) and further defining or comprising a plurality of injection ducts (22) rich open into said annular space (24); and

d) molten plastics material is simultaneously injected by way of said ducts (22) into said annular space (24), the material is allowed to cool and the resulting tube (24) is removed from the mould.

2. A process according to claim 1 wherein said injection ducts (22) each open into said annular space (24) by way of an orifice corresponding to a duct diameter of 0.7 to 1.4 mm or of a cross-section of equivalent area.

3. A process according to either one of claims 1 and 2 wherein the body (190) or the skirt blank (19) is disposed within a die (18) comprising a surface (31) in rich is disposed the end of the body (190) or the skirt (19) rich projects beyond said lower tool (9).

4. A process according to any one of claims 1 to 3 wherein, in operations (d):

– molten plastics material is simultaneously injected by way of the upper orifices (26) of said injection ducts (22) over a period of between 1.5 and 5 seconds;

– then the assembly is left to cool for a time rich is at least equal to three times the injection time;

– then the moulded article is removed from the mould by relative displacement of the tools, the plastics material of the injection ducts (22) or 'cold sprues' (220) being extracted from the die and/or die bottom tools (21), and the tube (45) is extracted; and

– the 'cold sprues' are then cut off.

5. A process according to any one of claims 1 to 4 wherein the lower part (3) of the pump (1) is disposed in a cavity (11) of said lower tool (10), the cavity (11) being surmounted by an upper peripheral edge (12) against rich the annular rim (2) of said pump (1) then bears, said annular rim (2) then projecting by at least 0.8 mm beyond said peripheral edge (12), and said cavity (11) in its upper part (13) having a diametral clearance of at least 0.2 mm with respect to the pump (1) and comprising below same a portion (14) for centering of the pump (1), having a maximum diametral clearance of 0.2 mm with respect to said pump.

6. A process according to claim 5 wherein the peripheral support surface (27) of the central upper tool (21) accommodating the upper part of the pump (1) against the annular fixing rim (2) of said pump (1) is of a width of between 0.8 and 1.4 mm.

7. A process according to either one of claims 5 and 6 wherein the peripheral fixing rim (2) of the pump (1) extends beyond said upper peripheral edge (12) of said central lower tool (10) by from 1 to 3 mm.

8. A process according to claim 5 wherein the cavity (11) in said central lower tool (10), in its upper part (13), has a clearance with respect to the pump (1) of at least 0.2 mm in respect of diameter over at least 5 mm in height, and that said centering portion (14) is at least 3 mm in height.

9. A process according to claim 6 wherein the central upper tool (21) caps the upper part (6) of the pump (1) with a lateral clearance of at least 0.3 mm in respect of diameter.

10. A process according to any one of claims 1 to 9 wherein said injection ducts (22) extend through the central upper tool (21) capping the pump (1) and open towards the top of the annular moulding space (24), said ducts (22) being inclined with respect to the vertical axis (Z) at an angle (θ) of between 24 and 40°.

11. A process according to claim 10 wherein the injection ducts (22) are inclined with respect to the axis (Z) at from 24 to 27°, the top (250) of the cavity (25) of the central upper tool (21) bearing against the discharge tube (9) of the pump (1) so as to reduce the height of said tool (21) and to facilitate removal of the moulded item from the mould.

12. A process according to either one of claims 10 and 11 wherein the injection ducts (22) are between 2 and 5 in number, their common diameter being between 0.8 and 1.3 mm and their upper orifices (26) being disposed within a circle of a diameter of 7 mm, which is centered on the axis (Z).

13. A process according to any one of claims 1 to 9 wherein the injection ducts (221) extend through the central upper tool (211) capping the pump (1) and open at the upper end of the annular moulding space (24), said ducts (221) being vertical.

14. A process according to any one of claims 1 to 13 wherein, above the die (18), the annular moulding space (24) comprises the contour of a peripheral groove (35) or a rib on the tube (45), said contour being provided by openable tools (32) provided with means for moving them apart.

15. A process according to claim 14 wherein the tube is removed from the mould by the following successive steps:
   – the lower tools (10 and 9) are lowered;
   – said tools (32) are opened, freeing the groove (35) or the rib;
   – the upper tools (18 and 32) and (40 and 21) are disengaged upwardly, the sprues (220) being removed from the mould and the lower tools (10 and 9) moving away from each other;
   – the tube (45) is released from the lower tools (10 and 9) by injecting air between the punch (9) and the central lower tool (10) and said tube (45) is extracted upwardly.

16. An assembly of moulding tools (10 and 9 and 18 and 32 and 42 and 21) for carrying out the process according to any one of claims 1 to 15 wherein:
   – a central lower tool (10) and a central upper tool (21) comprise central cavities (11 and 25) which face towards each other and in which said pump (1) is accommodated with clearances limiting the rise in temperature thereof due to the moulding operation, its annular fixing rim (2) being clamped sealingly between said tools (10 and 21) in the injection position;
   – the central tools (10 and 21) and an annular lower tool (9) define with annular die tools (18, 32, 40) disposed around a said body (190) or a said skirt (19) of a said tube (45) to be produced an annular moulding space (24) for an annular ring (36) for connection of the pump (1) and the body (190) or the skirt (19) of said tube (45);
   – the central upper or die tools (21) comprise at least two ducts (22) for injection of the molten plastics material, each opening into said annular space (24) by way of an orifice corresponding to a duct diameter of from 0.7 to 1.4 mm or of a cross-section of the same area.

17. A tool assembly according to claim 16 wherein the hollow cavity (11) of the central lower tool (10) is surmounted by an upper peripheral edge (12), the lower part (3) of the pump (1) being accommodated in said cavity (11) when the annular fixing rim (2) thereof bears against said upper peripheral edge (12), said annular rim (2) then projecting by at least 0.8 mm beyond said peripheral edge (12), said cavity (11), in its upper part (13), having a diametral clearance of at least 0.2 mm with respect to the pump (1) and comprising below same a portion (14) for centering of the pump (1), having a maximum diametral clearance of 0.2 mm with respect to said pump.

18. A tool assembly according to either one of claims 16 and 17 wherein the injection ducts (22; 221) which are between 2 and 5 in number are provided in the central die bottom tool (21; 211) and open towards the top of the annular moulding space (24), said ducts (22) being either vertical, said central tool (331) projecting with respect to said annular space (24), or inclined with respect to the vertical axis (Z) at an angle (θ) of between 24 and 40°.

19. A container 46 or tube 45 rich can be produced by the process according to any one of claims 1 to 15 comprising a body (190) or a skirt (19) of plastics material or metalloplastic material and a head comprising a pump (1) for distribution of a liquid or creamy product, the pump being provided with an annular fixing rim (2), said rim (2) being sealingly connected by moulding to said body (190) or said skirt (19), characterised in that said rim (2) rose periphery is of plastics material at least at the surface is connected to said body (190) or said skirt (19) by way of a semi-rigid annular ring (36) of plastics material of the same nature as that of the surface layers of said body (190) or said skirt (19), the periphery of said rim (2) being embedded in said ring (36).

20. A container (46) or tube (45) according to claim 19 wherein the connection of the annular ring to the annular rim (2) is in the form of an internal shoulder portion (39) on said ring (36) embracing the periphery of said rim over a width of at least 0.8 mm while the connecting portion (360) connecting said ring (36) to said body (190) or said skirt (19) is of a thickness rich continuously decreases without a local increase in thickness.

21. A container (46) or tube (45) according to either one of claims 19 and 20 wherein the width of said annular rim (2) contained in the internal shoulder portion (39) of said upper ring (26) is from 1 to 3 mm.

22. A container (46) or tube (45) according to either one of claims 19 and 20 wherein the plastics material of the annular rim (2) and that of said annular ring (36) are different and wherein the annular rim (2) is provided in its part contained in the moulding (39) with at least one circular groove or rib (15).

23. A container (46) or tube (45) according to claim 22 wherein the annular rim (2) comprises on its extreme edge a rib (15) of a width and a height which are both between 0.3 and 0.5 mm, the thickness of said extreme edge itself being between 0.6 and 1.2 mm.

24. A container (46) or tube (45) according to either one of claims 19 and 20 wherein the plastics material of the periphery of said annular rim (2) is of the same nature as those of the annular ring (36) and the surface layers of said body (190) or said skirt (19).

25. A container (46) or tube (45) according to any one of claims 19 to 24 wherein said annular ring (36) of plastics material is extended upwardly by a protective ring (38).

26. A container (46) or tube (45) according to any one of claims 19 to 25 wherein said pump (1) is without an air return.

27. A flexible container (46) or tube (45) according to claim 24 wherein said plastics material of the periphery of the annular rim (2) is polyethylene, the skirt (19) of the tube (45) being of low-density polyethylene and its upper ring (36) of high-density polyethylene.

28. A container or tube (450; 451) with a semi-rigid body (190) according to any one of claims 19 to 27 comprising after filling a piston (70) slidable sealingly within said body (190).

29. A container or tube (450; 451) according to claim 28 wherein the piston (70) itself comprises an upper flexible flared lip (71) slidable in the body (190) while providing for sealing in respect thereof, the bottom of said body (190) bearing a means for escape of air upon insertion of said piston (70) into said body (190), consisting of a transverse internal raised portion (195; 198) of a minimum inside diameter rich is smaller by 0.4 to 1.2 mm than the inside diameter of said body (190), said raised portion (195; 198) being preceded by a flared entry zone (197) permitting free engagement of the flared lip (71) of the piston (70) and then progressive contraction thereof, the central recessed portion (72) of the piston (70) being of smaller diameter than said internal raised portion (195; 198).

**FIG. 1**

**FIG. 2**

**FIG. 3**

**FIG. 4**

FIG. 5